## Europäisches Patentamt
## European Patent Office
## Office européen des brevets

(19)

(11) Veröffentlichungsnummer: **0 056 442**
A2

(12) # EUROPÄISCHE PATENTANMELDUNG

(21) Anmeldenummer: **81108932.5**

(22) Anmeldetag: **26.10.81**

(51) Int. Cl.³: **B 23 K 26/08**

(30) Priorität: **21.01.81 DE 3101793**

(43) Veröffentlichungstag der Anmeldung:
**28.07.82 Patentblatt 82/30**

(84) Benannte Vertragsstaaten:
**AT CH DE IT LI NL**

(71) Anmelder: **SIEMENS AKTIENGESELLSCHAFT Berlin und München**
**Postfach 22 02 61**
**D-8000 München 22(DE)**

(72) Erfinder: **Koszytorz, Günther**
**Am Schwadergraben 13**
**D-8122 Penzberg(DE)**

(54) **Schwenkbarer Strahlkopf zur Umlenkung eines Lichtstrahls.**

(57) Die Erfindung betrifft einen schwenkbaren Strahlkopf zur Umlenkung eines Lichtstrahles, der in einer Laserschreibanlage angewendet wird. Der Strahlkopf besteht aus einem Tubus (1) und einer eine Umlenkeinheit enthaltende Kammer (2), die bezüglich der optischen Achse zueinander justiert sind. Die Kammer (2) ist mit einem Flansch (4) und einem Zwischenring (5), die beide konzentrisch zur optischen Achse angeordnet sind, fest verbunden. Der Tubus (1) besitzt einen Konus (7), an dessen verjüngtem Ende (10) der Zwischenring (5) verschraubt ist. Der Konus (7) ist von einem Befestigungsstück (11) umgeben und in einem zentralen konischen Durchbruch (12) des Befestigungsstückes (11) gleitend gelagert. Auf dem zylindrisch auslaufenden verjüngten Ende (10) des Konus (7) befindet sich ein Außengewinde (17), auf das ein Feststellring (13) aufgeschraubt ist. Für das Schwenken des Strahlkopfes ist lediglich das Lösen des Feststellringes (13), das Verdrehen der Kammer (2) um die optische Achse und das erneute Verschrauben des Feststellrings (13) erforderlich. Eine erneute Justierung entfällt. Das Verdrehen der Kammer wird durch das Spiel beiderseits des Feststellrings (13) und die Lagerpassung des Konus (7) realisiert.

./...

SIEMENS AKTIENGESELLSCHAFT
Berlin und München

Unser Zeichen
VPA 81 P 3 0 0 4 E

## Schwenkbarer Strahlkopf zur Umlenkung eines Lichtstrahls

Die Erfindung betrifft einen schwenkbaren Strahlkopf zur Umlenkung eines Lichtstrahls, der aus einem Tubus und einer Kammer besteht, wobei wenigstens die Kammer gegenüber der optischen Achse verdrehbar an einem Befestigungsstück angeordnet ist.

Solche schwenkbaren Strahlköpfe sind in handelsüblichen optischen Einrichtungen, beispielsweise in einem Laserschreibkopf enthalten. Ein derartiger schwenkbarer Strahlkopf besteht aus einem am Tubus befindlichen Befestigungsstück und einer Kammer, die die Umlenkeinheit des Strahlkopfes enthält. Die Kammer ist mit dem Befestigungsstück verschraubt. Um den Strahlkopf um die optische Achse schwenken zu können, müssen die Schrauben gelöst und nach Verdrehen der Kammer wieder angezogen werden. Bereits beim Lösen der Verschraubung wie auch nach dem erneuten Verschrauben verändert die Kammer gegenüber dem Tubus erheblich ihre Lage. Dadurch ist nach jedem Schwenkvorgang der Kammer ein erneutes Justieren der Umlenkeinheit des Strahlkopfes erforderlich. Jeder erneute Justiervorgang bedeutet einen zusätzlichen Arbeitsaufwand.

Der Erfindung liegt die Aufgabe zugrunde, einen schwenkbaren Strahlkopf der eingangs genannten Art so auszubilden, daß er unter Beibehaltung seiner Justierung um die optische Achse schwenkbar ist.

Erfindungsgemäß wird diese Aufgabe dadurch gelöst, daß der Tubus einen konzentrisch zur optischen Achse liegenden Konus besitzt, daß der Konus ein zylindrisch auslaufendes verjüngtes Ende mit einem Außengewinde besitzt,

Fi 2 Bih / 07.01.1981

**0056442**

daß am verjüngten Ende des Konus die Kammer befestigt ist, daß das Befestigungsstück einen konischen Durchbruch für die gleitende Lagerung des Konus aufweist, und daß ein Feststellring auf das Außengewinde des Konus aufgeschraubt ist.

Durch die mechanisch feste Verbindung der Kammer, die die Umlenkeinheit des Strahlkopfes enthält, mit dem Tubus über den Konus sind die justierten Teile des Strahlkopfes zueinander fixiert. Die Justierung des Strahlkopfes wird durch ein Schwenken des Strahlkopfes nicht verändert. Für ein Schwenken des Strahlkopfes ist lediglich das Lösen des Feststellringes, das Drehen der Gesamtheit der zueinander justierten und fest miteinander verbundenen Teile des Strahlkopfes und das erneute Verschrauben des Feststellringes erforderlich. Durch das geringe Spiel zwischen dem Befestigungsstück und dem Feststellring und zwischen der Kammer und dem Feststellring und durch die Lagerpassung des Konus im konischen Durchbruch des Befestigungsstückes wird die Schwenkbarkeit des Strahlkopfes realisiert. Durch die feste Verbindung des Tubus mit der Kammer und die Lagerung des Konus im konischen Durchbruch des Befestigungsstückes wird bei einem Schwenkvorgang des Strahlkopfes der Abstand zwischen dem Laser und der Umlenkeinheit in der Kammer nicht verändert.

Vorteilhaft ist es, daß zwischen dem Feststellring und dem Befestigungsstück und zwischen dem Feststellring und der Kammer jeweils ein Gleitring vorhanden ist, weil dadurch die Reibung zwischen diesen Bauteilen und damit die Beanspruchung der aneinanderliegenden Flächen dieser Bauteile beim Verdrehen des Feststellringes oder der Kammer weitgehend vermindert wird.

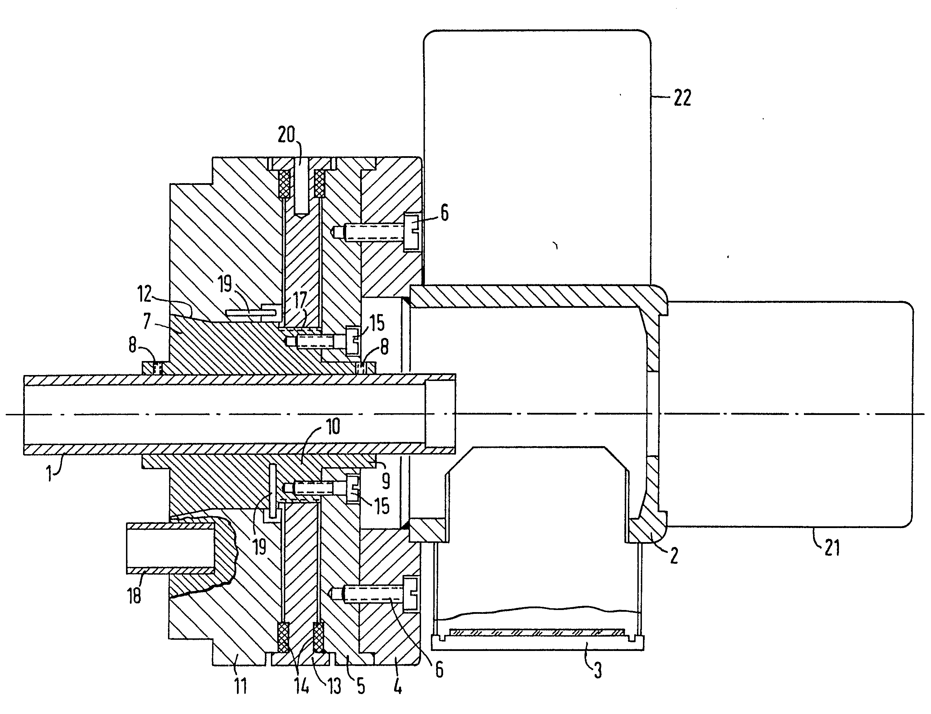

Die Erfindung wird im folgenden beispielhaft anhand der Figur dargestellt und beschrieben.

In der Figur ist der erfindungsgemäße schwenkbare Strahlkopf zur Umlenkung eines Lichtstrahles in der Ausführung eines Laserstrahlkopfes dargestellt. Der von links kommende Laserstrahl durchsetzt einen Tubus 1 und tritt vom Tubus 1 in eine Kammer 2 ein, in der sich eine Umlenkeinheit für den Laserstrahl befindet. Aus Gründen der Übersichtlichkeit ist die Spiegelanordnung der Umlenkeinheit nicht in der Figur enthalten. Der Laserstrahl tritt senkrecht zur optischen Achse durch ein nicht dargestelltes Objektiv und ein Fenster 3 der Kammer 2 aus dem Strahlkopf aus und wird zur Beschriftung von Gegenständen weiter verwendet. In dem Tubus 1 ist eine nicht dargestellte Aufweitungsoptik für den Laserstrahl angeordnet. Die Kammer 2 ist von quaderförmiger Gestalt. In entgegengesetzter Lage zum Fenster 3 und rechts an die Kammer 2 anschließend befindet sich je ein Rundbecher 21 und 22, die jeweils eine Scannereinrichtung für den Laserschreibkopf enthalten und für den Laserstrahl durch Öffnungen in der Kammer 2 zugänglich sind. An die Kammer 2 ist ein ringförmiger Flansch 4 geschweißt. Der Flansch 4 ist konzentrisch zum Tubus 1 und damit zur optischen Achse angeordnet. Mit dem Flansch 4 ist ein Zwischenring 5 konzentrisch zum Tubus 1 durch Schrauben 6 lösbar verbunden. Der Tubus 1 ist von einem Konus 7 umgeben, der durch Schrauben 8 lösbar mit dem Tubus 1 verbunden ist. An seinem verjüngten Ende weist der Konus 7 einen rohrförmigen Teil 9 auf, der den Durchbruch des Zwischenringes 5 durchsetzt. Weiterhin besitzt der Konus 7 ein zylindrisch auslaufendes verjüngtes Ende 10, das mit einem Außengewinde 17 versehen ist. Der Konus 7 ist von einem Befestigungsstück 11 umgeben und in einem konischen Durchbruch 12 des Befestigungsstückes 11 gleitend gelagert. Der Zwischenring 5 ist am verjüngten Ende 10 des Konus 7 mittels Schrauben 15 fest und lösbar mit dem Konus 7 verbunden. Damit besteht zwischen dem Tubus 1 und der Kammer 2 eine mechanisch feste Verbindung über den Konus 7, den Zwischenring 5 und den Flansch 4. Ein Feststellring 13 ist auf das Außengewinde 17 des zylindrisch auslaufenden verjüngten Endes 10 des Konus 7 aufgeschraubt. Zwischen dem Feststellring 13 und dem Zwischenring 5 einerseits und dem Befestigungsstück 11 andererseits ist im nicht verschraubten Zustand ein geringes Spiel vorhanden. Zwischen dem Feststellring 13 und dem Befestigungsstück 11 und zwischen dem Feststellring 13 und dem Zwischenring 5 befindet sich jeweils ein Gleitring 14 aus Bronze zur Verminderung der Reibung zwischen den Bauteilen 11, 13 und 5 beim Verdrehen des Feststellringes 13 oder der fest miteinander verbundenen Bauteile 2, 4, 5, 7 und 1. Die Bauteile 1, 7, 11, 13, 5, 4 und 2 bestehen aus Aluminium. Das Befestigungsstück 11 ist ortsfest angeordnet und durch eine mit dem Befestigungsstück 11 fest verbundene Zentrierhülse 18 gegenüber der links vom Strahlkopf liegenden und nicht in der Figur enthaltenen Laseranordnung zentriert. Der Feststellring 13 weist ein radiales Sackloch 20 zum Eingreifen eines Werkzeuges auf, mit dem der Feststellring 13 leichter gelöst und verschraubt werden kann. Zwei senkrecht zueinander stehende Anschlagstifte 19, von denen der obere Anschlagstift am Befestigungsstück 11 und der untere Anschlagstift am Konus 7 befestigt ist, begrenzen den Schwenkbereich des Strahlkopfes auf $\pm$ 175$^\circ$. Dadurch wird ein Drehen der Kammer über etwa einen halben Vollwinkel hinaus verhindert, wodurch die an der Innenwand des Tubus geführten und nicht in der Figur dargestellten Kabel vor übermäßiger Beanspruchung und gegebenenfalls Zerstörung durch übermäßiges Verdrehen in gleicher Richtung geschützt werden.

0056442

Bei einer Schwenkung des Strahlkopfes durch Drehung der Kammer 2 um die optische Achse wird der Feststellring 13, der im verschraubten Zustand flächenpressend gegen das Befestigungsstück 11 als Widerlager drückt, durch Verdrehen um den Bruchteil einer vollen Umdrehung gelöst. Durch Lösen des Feststellringes 13 aus seinem verschraubten Zustand wird der mit dem Feststellring 13 durch das Außengewinde 17 verbundene Konus 7 parallel zur optischen Achse geringfügig nach links verschoben. In diesem gelösten Zustand ist die Gesamtheit der mechanisch fest miteinander verbundenen und zueinander justierten Bauteile 1, 7, 5, 4 und 2 drehbar. Die Gesamtheit der Bauteile 1, 7, 5, 4 und 2 wird um die optische Achse in die gewünschte neue Stellung verdreht. Nach Verdrehen der fest miteinander verbundenen Bauteile 1, 7, 5, 4 und 2 wird der Feststellring 13 wieder gegen das Befestigungsstück 11 verschraubt, wodurch der Konus 7 in seine passende Lage im Durchbruch 12 des Befestigungsstücks 11 zurückgezogen wird.

Durch die erfindungsgemäße Vorrichtung entsteht eine spielfreie und zentrisch zur optischen Achse liegende Aufhängung des Laserschreibkopfes, die eine Nachjustierung der Umlenkeinheit des Schreibkopfes nach dem Schwenken des Schreibkopfes unnötig macht.

1 Figur
2 Patentansprüche

Patentansprüche

1. Schwenkbarer Strahlkopf zur Umlenkung eines Lichtstrahls, bestehend aus einem Tubus und einer Kammer, wobei wenigstens die Kammer gegenüber der optischen Achse verdrehbar an einem Befestigungsstück angeordnet ist, dadurch gekennzeichnet, daß der Tubus (1) einen konzentrisch zur optischen Achse liegenden Konus (7) besitzt, daß der Konus (7) ein zylindrisch auslaufendes verjüngtes Ende (10) mit einem Außengewinde (17) besitzt, daß am verjüngten Ende (10) des Konus (7) die Kammer (2) befestigt ist, daß das Befestigungsstück (11) einen konischen Durchbruch (12) für die gleitende Lagerung des Konus (7) aufweist, und daß ein Feststellring (13) auf das Außengewinde (17) des Konus (7) aufgeschraubt ist.

2. Schwenkbarer Strahlkopf nach Anspruch 1, dadurch gekennzeichnet, daß zwischen dem Feststellring (13) und dem Befestigungsstück (11) und zwischen dem Feststellring (13) und der Kammer (2) jeweils ein Gleitring (14) vorhanden ist.

0056442